# EUROPEAN PATENT SPECIFICATION

(11) **EP 4 359 864 B1**
(45) Date of publication and mention of the grant of the patent: **18.11.2026**
(21) Application number: 21947323.8
(22) Date of filing: 22.06.2021
(51) Int. Cl.: G03B 15/03, G02F 1/00, G02F 1/01, G03B 11/00, G03B 33/08

(54) **LIQUID CRYSTAL TUNABLE POLARIZATION FILTERS FOR COLOR IMAGERS**
FLÜSSIGKRISTALLABSTIMMBARE POLARISATIONSFILTER FÜR FARBBILDERZEUGER
FILTRES DE POLARISATION ACCORDABLES À CRISTAUX LIQUIDES POUR IMAGEURS COULEUR

(43) Date of publication of application: 01.05.2024
(73) Proprietor: Hewlett-Packard Development Company, L.P., Spring TX 77389 (US)
(72) Inventor: THOMAS, III, Fred Charles, Fort Collins, Colorado 80528-8903 (US)
(74) Representative: Plasseraud IP
(86) International application number: PCT/US2021/038367
(87) International publication number: WO 2022/271153

(56) References cited:
- JP-A- 2009 071 676
- US-A1- 2009 279 807
- US-A1- 2013 137 949
- US-A1- 2020 330 034
- US-B1- 6 403 947
- US-B1- 9 989 413
- US-B2- 10 240 980
- US-B2- 8 369 014
- US-B2- 8 988 680
- BARTLETT B D ET AL: "BARTLETT B D ET AL", OPTICAL ENGINEERING, vol. 50, no. 8, 1 August 2011 (2011-08-01), 01-08-2011, pages 081207-1 - 081207-9, XP060016549
- ALENIN ANDREY S ET AL: "Hyperspectral measurement of the scattering of polarized light by skin", POLARIZATION SCIENCE AND REMOTE SENSING V, SPIE, 1000 20TH ST. BELLINGHAM WA 98225-6705 USA, vol. 8160, no. 1, 8 September 2011 (2011-09-08), pages 1 - 17, XP060018408, DOI: 10.1117/12.895552

## Description

### Background

Digital camera systems may be used to capture images of an object. The images may be used for many different purposes, including to create a three-dimensional model of the object. Various filters may be used to filter light reflected from the object before the reflected light reaches the digital camera.

A camera system including a liquid crystal tunable polarization filter for providing selectable polarization viewing states during image acquisition is disclosed in "Anomaly detection with varied ground sample distance utilizing spectropolarimetric imagery collected using a liquid crystal tunable filter", Bartlett B D et.al., OPTICAL ENGINEERING, vol. 50, no. 8, 1 August 2011 (2011-08-01), pages 081207-1-081207-9.

### Brief Description of the Drawings

Figure 1 is a block diagram illustrating a camera system according to an example.
Figure 2 is a block diagram illustrating a filter driver and compensation circuit according to an example.
Figure 3 is a layer diagram illustrating layers of a liquid crystal tunable polarization filter according to an example.
Figure 4 is a block diagram illustrating a color camera system according to another example.
Figure 5 is a flow diagram illustrating a method of capturing an image according to an example.
Figure 6 is a block diagram illustrating an image capture system according to an example.

### Detailed Description

In the following detailed description, reference is made to the accompanying drawings which form a part hereof, and in which is shown by way of illustration specific examples in which the disclosure may be practiced. It is to be understood that other examples may be utilized and structural or logical changes may be made without departing from the scope of the present disclosure. The following detailed description, therefore, is not to be taken in a limiting sense, and the scope of the present disclosure is defined by the appended claims. It is to be understood that features of the various examples described herein may be combined, in part or whole, with each other, unless specifically noted otherwise.

Some examples disclosed herein are directed to a camera system with a liquid crystal (LC) tunable polarization filter (TPF). An object to be imaged is illuminated with a plurality of different linearly polarized white light illumination orientations at a low illumination grazing angle. While the object is being illuminated, a camera captures at least one very high resolution image (e.g., 108 Megapixels) of the object at each of a plurality of different linear polarization viewing states. A liquid crystal tunable polarization filter may be positioned between the object and the camera to selectively provide the different linear polarization viewing states to the camera.

In an example, the liquid crystal tunable polarization filter includes a liquid crystal molecular layer positioned between glass layers followed by a quarter-wave retarder, which is followed by a fixed linear polarizer. In an example, the liquid crystal tunable polarization filter is controlled by an adjustable amplitude 2 KHz driver circuit. Adjusting the amplitude of the drive signal provided by the driver circuit results in a change in the amount of polarization rotation caused by the liquid crystal tunable polarization filter. Some examples include an embedded calibration mechanism to provide continual compensation for environmental temperature changes and a non-exact thickness of the liquid crystal molecular layer. In some examples, the calibration mechanism performs a self-calibration function to address a non-uniformity of polarization rotation or retardance of different wavelengths.

Some examples disclosed herein provide a low cost method of generating multiple linear polarization viewing states for a camera device, which involves: no moving parts, such as a mechanical filter rotation mechanism; no camera pixel shift, which can occur with a mechanical filter; a compact and monolithic architecture; a short (e.g., tens of milliseconds) response time to switch between polarization viewing states; and zero to half wave function with a hundred or more linear polarization viewing states.

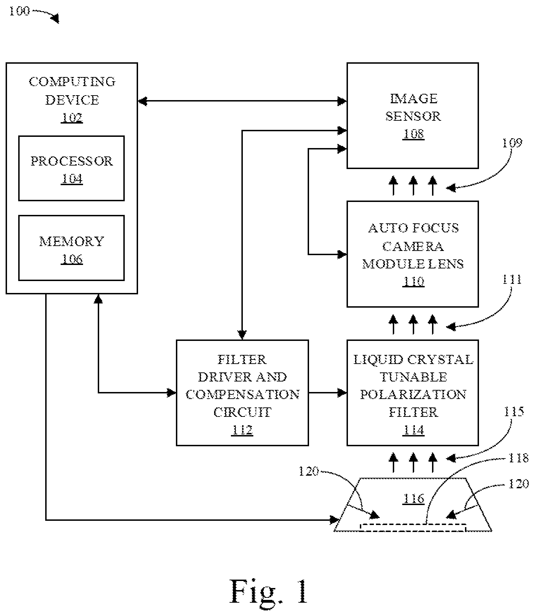

Figure 1 is a block diagram illustrating a camera system 100 according to an example. In an example, camera system 100 is a photometric stereo camera system based on a bidirectional reflectance distribution function (BRDF), and captures high-resolution images (e.g., 108 megapixel images) of planar materials. Photometric stereo is a technique in computer vision for estimating the surface normal of an object by observing that object under different lighting conditions. It is based on the fact that the amount of light reflected by a surface is dependent on the orientation of the surface in relation to the light source and the observer. BRDF is a radiometric concept, and may be used for photorealistic rendering of an object. BRDFs can be measured directly from real objects using calibrated cameras and light sources.

As shown in Figure 1, the camera system 100 includes computing device 102, image sensor 108, auto focus camera module lens 110, filter driver and compensation circuit 112, liquid crystal tunable polarization filter 114, and light source 116. In an example, image sensor 108 is a 108 megapixel CMOS red, green, blue (RGB) image sensor. In an example, auto focus camera module lens 110 includes a multi-element wide-angle short focal length (e.g., 5.7mm) lens.

Computing device 102 includes processor 104 and memory 106. Processor 104 includes a central processing unit (CPU) or another suitable processor. In an example, memory 106 stores machine readable instructions executed by processor 104 for operating system 100. Memory 106 includes any suitable combination of volatile and/or non-volatile memory, such as combinations of Random-Access Memory (RAM), Read-Only Memory (ROM), flash memory, and/or other suitable memory. These are examples of non-transitory computer readable media (e.g., non-transitory computer-readable storage media storing computer-executable instructions that when executed by at least one processor cause the at least one processor to perform a method). The memory 106 is non-transitory in the sense that it does not encompass a transitory signal but instead is made up of at least one memory component to store machine executable instructions for performing techniques described herein. Memory 106 may store at least one module, and processor 104 may execute instructions of the at least one module to perform techniques described herein.

In an example, light source 116 includes eight light emitting diode (LED) panels that each include an array of LEDs. The LED panels may be configured in an octagonal arrangement that forms a chamber around an object 118 to be imaged, provides polarized light to the object 118 from eight different illumination orientations, and blocks ambient light. The illumination provided by light source 116 is represented in Figure 1 by arrows 120. Each of the eight LED panels of light source 116 provides linear polarized white light illumination to the object 118 at a low illumination grazing angle, such as 30 degrees relative to a horizontal plane. In some examples, the illumination grazing angle is in the range of 20 to 40 degrees relative to the horizontal plane.

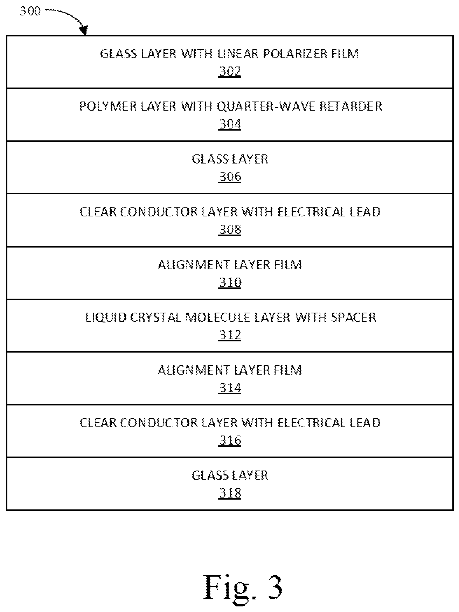

As the object 118 is being illuminated by light source 116, images of the object 118 are captured by image sensor 108 in a plurality of different polarization viewing states. Light 115 reflected from the object 118 is filtered by liquid crystal tunable polarization filter 114 to produce filtered light 111. Auto focus camera module lens 110 receives the filtered light 111, and provides a focused image 109 to image sensor 108 to capture. Filter driver and compensation circuit 112 drives filter 114, which may include a liquid crystal molecular layer followed by a quarter-wave retarder, which is followed by a linear polarizer, to selectively provide the plurality of different polarization viewing states. An example implementation of filter 114 is shown in Figure 3 and is described in further detail below.

Image sensor 108 provides captured images to computing device 102 for processing. In some examples, computing device 102 processes the captured images with BRDF extraction algorithms, which involves viewing linearly polarized illuminated surfaces with a selective elliptical polarization state filter to discern surface reflective structure features from different illumination orientations, such as degree of specular reflectivity or diffuse reflectivity or the combination of both modes of reflection. This helps in the extraction of information for computing device 102 to be able to create digital three-dimensional (3D) models of a surface's reflectance for realistic animation graphically of these surfaces.

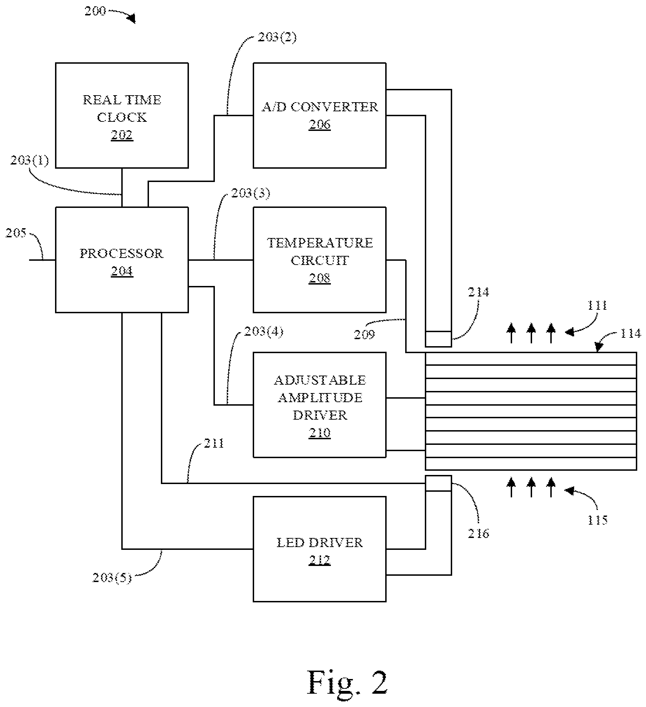

Figure 2 is a block diagram illustrating a filter driver and compensation circuit 200 according to an example. In an example, filter driver and compensation circuit 112 (Figure 1) is implemented with circuit 200. Circuit 200 includes real time clock 202, processor 204, analog-to-digital (A/D) converter 206, temperature circuit 208, adjustable amplitude driver 210, LED driver 212, photo sensor 214, and red, green, and blue (RGB) LEDs 216. In an example, A/D converter 206 is a 12-bit A/D converter. In an example, photo sensor 214 is a photo transistor or a photo diode. In an example, RGB LEDs 216 are RGB domed lens LEDs with linear polarization.

In an example, processor 204 is coupled to real time clock 202, A/D converter 206, temperature circuit 208, adjustable amplitude driver 210, and LED driver 212 via Inter-Integrated Circuit (I²C) communication links 203(1)-203(5), respectively. I²C communication links 203(1)-203(5) may collectively be referred to as I²C communication links 203. In an example, processor 204 is coupled to computing device 102 (Figure 1) via a Serial Peripheral Interface (SPI) communication link 205.

In an example, adjustable amplitude driver 210 provides a 2 KHz adjustable amplitude alternating current (AC) drive signal (e.g., a 2 KHz square wave) to liquid crystal tunable polarization filter 114. Processor 204 communicates with driver 210 via I²C communication link 203(4) to control the amplitude of the AC drive signal generated by driver 210. The AC drive signal controls a liquid crystal molecular layer in filter 114 (e.g., liquid crystal molecule layer 312 in Figure 3). The liquid crystal molecular layer acts as a variable retarder and causes a polarization rotation of the incoming light 115 that has been reflected from the object 118 (Figure 1).

The amount of the polarization rotation or phase retardance is controlled by the amplitude of the AC drive signal. Thus, the amplitude of the AC drive signal may be adjusted upward or downward to provide more or less polarization rotation, which allows the circuit 200 to selectively provide a plurality of different polarization viewing states based on the amplitude of the AC drive signal. The amount of polarization rotation or phase retardance and hence polarization viewing state for each of the three RGB colors of the camera differs and hence the each color polarization information is calibrated and processed uniquely / separately. Figure 2 is described in further detail below with additional reference to Figure 3.

Figure 3 is a layer diagram illustrating layers of a liquid crystal tunable polarization filter 300 according to an example. In an example, liquid crystal tunable polarization filter 114 (Figures 1 and 2) is implemented with filter 300. Filter 300 includes glass layer with linear polarizer film 302, polymer layer with quarter-wave retarder 304, glass layer 306, clear conductor layer with electrical lead 308, alignment layer film 310, liquid crystal molecule layer with space 312, alignment layer film 314, clear conductor layer with electrical lead 316, and glass layer 318.

In an example, layer 302 has a thickness of about 1 mm; layer 304 has a thickness of about 100 um; layer 306 has a thickness of about 1 mm; layer 308 has a thickness of about 50 um; layer 310 has a thickness of about 20 um; layer 312 has a thickness that is a half-wave multiple of the light; layer 314 has a thickness of about 20 um; layer 316 has a thickness of about 50 um; and layer 318 has a thickness of about 1 mm.

In an example, layers 308 and 316 include an indium-tin-oxide (ITO) film or poly(3,4-ethylenedioxythiophene) (PEDOT) film, which are clear films that may be processed to form the electrical leads. The electrical leads in layers 308 and 316 may be electrically coupled to adjustable amplitude driver 210 (Figure 2) to receive the AC drive signal.

During operation according to an example, light 115 (Figure 1) reflected from the object 118 being imaged enters the filter 300 from the bottom of the layer stack shown in Figure 3. The liquid crystal molecule layer 312 is electrically controlled to adjust the polarization state of the incoming light 115. In an example, the liquid crystal molecule layer 312 includes spacers, such as uniform plastic spheres to provide a precise and uniform liquid crystal cell gap and help prevent denting.

The liquid crystal molecule layer 312 provides tunable retardation by changing the effective birefringence of the material with applied voltage, which changes the input polarized light. Anisotropic nematic liquid crystal molecules form uniaxial birefringent layers in the liquid crystal cell. A feature of nematic material is that, on average, molecules are aligned with their long axes parallel, but with their centers randomly distributed. With no voltage applied, the liquid crystal molecules lie parallel to the substrates and maximum retardation is achieved. When voltage is applied, liquid crystal molecules begin to tip perpendicular to the substrates. As the applied voltage is increased, the liquid crystal molecules tip further causing a reduction in the effective birefringence and hence, retardance. The overall retardance of a liquid crystal cell may decrease with increasing temperature.

The quarter-wave retarder in layer 304 is used to convert elliptical polarized light formed by the liquid crystal molecule layer 312 to linearly polarized light. In an example, the fast axis of the liquid crystal molecule layer 312 is oriented at 45 degrees to the slow axis of the quarter-wave retarder in layer 304. Polarization rotation is achieved by electrically controlling the variable retardance of the liquid crystal molecule layer 312 via the AC drive signal from driver 210.

Referring again to Figure 2, in an example, filter driver and compensation circuit 200 performs a closed-loop self-calibration function. In some examples, light source 116 (Figure 1) provides polarized white light illumination, and the amount of polarization rotation caused by liquid crystal tunable polarization filter 114 may vary based on the wavelength of the received light. Thus, red, green, and blue primary colors in the received light may be rotated differently for the same control signal applied by driver 210. In some examples, the filter driver and compensation circuit 200 performs the self-calibration function to address this non-uniformity of polarization rotation.

In some examples, the self-calibration function may be initiated by computing device 102 by sending a calibration request to filter driver and compensation circuit 200 via SPI communication link 205. In response to the calibration request, processor 204 causes LED driver 212 to drive RGB LEDs 216 to successively provide polarized red light, polarized green light, and polarized blue light, in a given order, through the filter 114 and toward the photo sensor 214. In an example, processor 204 is coupled to the RGB LEDs 216 via a general purpose input/output (GPIO) communication link 211 to individually turn on and turn off the red, green, and blue LEDs to provide the successive red, green, and blue light.

While each of the individual red, green, and blue colors of light are directed through the filter 114, processor 204 causes adjustable amplitude driver 210 to step the amplitude of the drive signal provided by driver 210 through a plurality of amplitude values between a minimum amplitude value and a maximum amplitude value. Photo sensor 214 senses the red, green, and blue light transmitted through the filter 114 by RGB LEDs 216, and the analog sensed light values are converted to digital light values by A/D converter 206. A/D converter 206 provides the digital light values to processor 204.

The digital light values may be used by processor 204 (or computing device 102) to determine calibration information, including the amount of polarization rotation that occurs for red light, green light, and blue light, respectively, for each of the amplitude values of the drive signal provided by driver 210. The calibration information may be stored in a calibration lookup table (calibration LUT) in memory 106, and may be used during normal operation of the camera system 100 after the self-calibration.

Another aspect of the self-calibration function according to an example is to record a temperature value and a current date and time each time the self-calibration function is performed. In an example, temperature circuit 208 is coupled to a surface of the filter 114 via a thermal couple 209 to sense the temperature at the filter 114. When a self-calibration function is performed, processor 204 communicates with temperature circuit 208 and real time clock 202 to receive a current temperature value from the temperature circuit 208 and a real time clock value from the real time clock 202, and may store these value in the calibration LUT along with the polarization rotation information for red, green, and blue light.

After a self-calibration function has been performed in response to a calibration request from computing device 102, processor 204 may send a calibration response to the computing device 102 via SPI communication link 205 to indicate whether the self-calibration function was performed successfully. For example, if the light source 116 is on during the self-calibration function, this may result in an unsuccessful completion of the self-calibration function in some examples. Photo sensor 214 may be used at the beginning of the self-calibration function to determine if the light source 116 is on.

After a self-calibration function has been performed, and during normal operation of the camera system 100, computing device 102 may send a command to processor 204 via SPI communication link 205 to request that the polarization rotation for a given color (e.g., red, green, or blue) be set to a given angular value. For example, computing device 102 may request that the polarization rotation for red light be set at 30 degrees.

In response to the request, the processor 204 may access the calibration LUT to identify the amplitude of a drive signal from driver 210 that will result in a polarization rotation of red light of 30 degrees, and then cause driver 210 to generate a drive signal at the identified amplitude. The processor 204 may also identify the values of polarization rotation for the non-specified colors (e.g., green and blue) at the identified amplitude in the calibration LUT. While the driver 210 is driving the filter 214 at the identified amplitude, image sensor 108 may capture at least one image of the object 118, and provide the at least one image to the computing device 102. In an example, the polarization rotation values for red, green, and blue at the identified amplitude may be sent to computing device 102 via SPI communication link 206 and appended as metadata to the at least one image.

In some examples, if the change in time from a current time (indicated by real time clock 202) to the last time the self-calibration function was performed exceeds a threshold time value, or if a change in temperature (indicated by temperature circuit 208) at a current time compared to the temperature at the last time the self-calibration function was performed exceeds a threshold temperature value, camera system 100 may automatically perform another self-calibration function. For smaller temperature changes that do not exceed the threshold temperature value, rather than performing another self-calibration function, camera system 100 may automatically adjust the calibration information based on the temperature difference and a known relationship between the retardance of the liquid crystal molecule layer 312 and temperature changes.

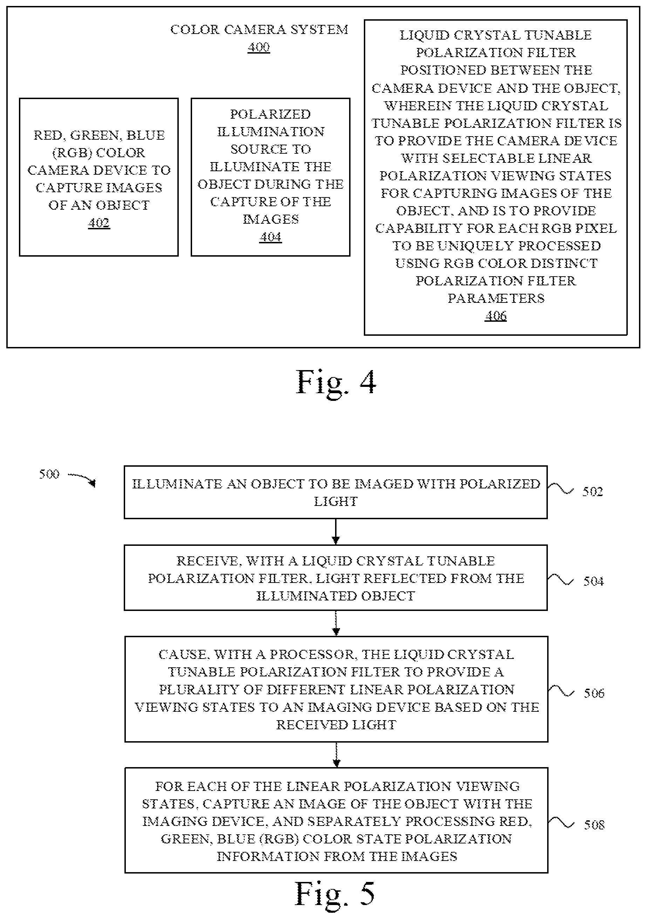

An example of the present disclosure is directed to a color camera system. Figure 4 is a block diagram illustrating a color camera system 400 according to an example. Color camera system 400 includes a red, green, blue (RGB) color camera device 402 to capture images of an object. Color camera system 400 includes a polarized illumination source 404 to illuminate the object during the capture of the images. Color camera system 400 also includes a liquid crystal tunable polarization filter 406 positioned between the camera device and the object, wherein the liquid crystal tunable polarization filter 406 is to provide the camera device with selectable linear polarization viewing states for capturing the images of the object, and is to provide capability for each RGB pixel to be uniquely processed using RGB color distinct polarization filter parameters.

In some examples, the liquid crystal tunable polarization filter 406 may include an electrically controllable liquid crystal light phase retarding element. The liquid crystal tunable polarization filter 406 may further include a quarter-wave retarding element positioned over the liquid crystal light phase retarding element, and a linear polarizer element positioned over the quarter-wave retarding element, wherein the linear polarizer element is positioned closer to the camera device 402 than the liquid crystal light phase retarding element.

In some examples, the color camera system 400 may further include a processor and a driver circuit, wherein the processor is to control the driver circuit to provide a control signal to the liquid crystal tunable polarization filter 406 to select the linear polarization viewing states. The control signal may be an adjustable amplitude oscillating voltage signal, and different ones of the linear polarization viewing states may be selected by varying an amplitude of the control signal.

In some examples, the color camera system 400 may further include a compensation circuit to perform a self-calibration function to compensate the liquid crystal tunable polarization filter 406 for each of three RGB pixel color channels from the camera device. The compensation circuit may include red, green, and blue light emitting diodes (LEDs) with linear polarization to successively project red, green, and blue light through the liquid crystal tunable polarization filter 406 in any given order, and a photo sensor to sense the light that has been projected through the liquid crystal tunable polarization filter 406. The color camera system may further include a processor and a driver circuit, wherein the processor is to control the driver circuit to provide varying control signals to the liquid crystal tunable polarization filter 406 while the red, green, and blue light are successively projected through the liquid crystal tunable polarization filter 406. The processor may store calibration data based on outputs of the photo sensor, and store a real time clock value and a current temperature value with the calibration data. The processor may adjust control of the liquid crystal tunable polarization filter 406 based on the stored calibration data.

In some examples, the color camera system 400 may be a photometric stereo camera system, wherein the illumination source illuminates the object at a grazing angle from multiple positions around the object, and wherein each of the captured images is at least 50 Megapixels.

Another example of the present disclosure is directed to a method of capturing an image. Figure 5 is a flow diagram illustrating a method 500 of capturing an image according to an example. At 502, method 500 includes illuminating an object to be imaged with polarized light. At 504, method 500 includes receiving, with a liquid crystal tunable polarization filter, light reflected from the illuminated object. At 506, method 500 includes causing, with a processor, the liquid crystal tunable polarization filter to provide a plurality of different linear polarization viewing states to an imaging device based on the received light. At 508, method 500 includes, for each of the linear polarization viewing states, capturing an image of the object with the imaging device and separately processing red, green, blue (RGB) color state polarization information from the images.

The method 500 may further include adjusting, with the processor, an amplitude of a control signal provided to the liquid crystal tunable polarization filter to provide the plurality of different linear polarization viewing states.

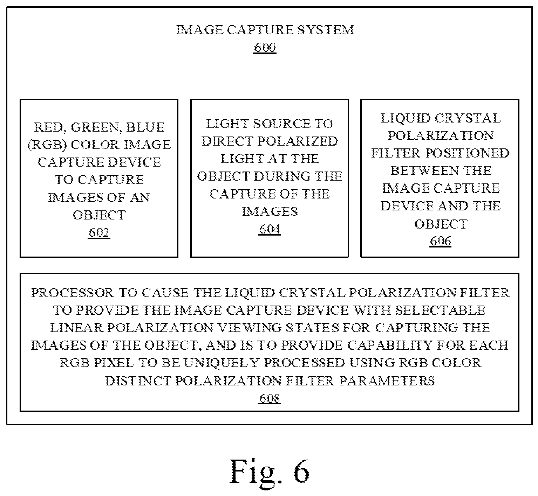

Another example of the present disclosure is directed to an image capture system. Figure 6 is a block diagram illustrating an image capture system 600 according to an example. Image capture system 600 includes a red, green, blue (RGB) color image capture device 602 to capture images of an object. Image capture system 600 includes a light source 604 to direct polarized light at the object during the capture of the images. Image capture system 600 includes a liquid crystal polarization filter 606 positioned between the image capture device and the object. Image capture system 600 includes a processor 608 to cause the liquid crystal polarization filter to provide the image capture device with selectable linear polarization viewing states for capturing the images of the object, and is to provide capability for each RGB pixel to be uniquely processed using RGB color distinct polarization filter parameters.

In some examples, the liquid crystal polarization filter 606 includes an electrically controllable liquid crystal layer, a linear polarizer layer, and a quarter-wave retarding layer positioned between the electrically controllable liquid crystal layer and the linear polarizer layer, wherein the linear polarizer layer is positioned closer to the camera device than the electrically controllable liquid crystal layer and the quarter-wave retarding layer.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims.

## Claims

1. A color camera system (400), comprising:
a camera device (402) to capture images of an object (118);
a polarized illumination source (116, 404, 604) to illuminate the object (118) during the capture of the images; and
a liquid crystal tunable polarization filter (114, 300, 406) positioned between the camera device (402) and the object (118), wherein the liquid crystal tunable polarization filter (114, 300, 406) is to provide the camera device (402) with selectable linear polarization viewing states for capturing the images of the object (118),
**characterized in that**:
the camera device is a red, green, blue (RGB) colour camera device and the liquid crystal tunable polarization filter provides capability for each RGB pixel to be uniquely processed using RGB color distinct polarization filter parameters.

2. The color camera system (400) of claim 1, wherein the liquid crystal tunable polarization filter (114, 300, 406) includes an electrically controllable liquid crystal light phase retarding element.

3. The color camera system (400) of claim 2, wherein the liquid crystal tunable polarization filter (114, 300, 406) further includes a quarter-wave retarding element positioned over the liquid crystal light phase retarding element, and a linear polarizer element positioned over the quarter-wave retarding element, wherein the linear polarizer element is positioned closer to the camera device (402) than the liquid crystal light phase retarding element.

4. The color camera system (400) of claim 1, and further comprising a processor (104, 204, 608) and a driver circuit, wherein the processor (104, 204, 608) is to control the driver circuit to provide a control signal to the liquid crystal tunable polarization filter (114, 300, 406) to select the linear polarization viewing states.

5. The color camera system (400) of claim 4, wherein the control signal is an adjustable amplitude oscillating voltage signal, and wherein different ones of the linear polarization viewing states are selected by varying an amplitude of the control signal.

6. The color camera system (400) of claim 1, and further comprising a compensation circuit (112, 200) to perform a self-calibration function to compensate the liquid crystal tunable polarization filter (114, 300, 406) for each of three RGB pixel color channels from the camera device (402).

7. The color camera system (400) of claim 6, wherein the compensation circuit (112, 200) comprises red, green, and blue light emitting diodes (LEDs) (216) with linear polarization to successively project red, green, and blue light through the liquid crystal tunable polarization filter (114, 300, 406) in any given order, and a photo sensor (214) to sense the light that has been projected through the liquid crystal tunable polarization filter (114, 300, 406).

8. The color camera system (400) of claim 7, and further comprising a processor (104, 204, 608) and a driver circuit, wherein the processor (104, 204, 608) is to control the driver circuit to provide varying control signals to the liquid crystal tunable polarization filter (114, 300, 406) while the red, green, and blue light are successively projected through the liquid crystal tunable polarization filter (114, 300, 406).

9. The color camera system (400) of claim 8, wherein the processor (104, 204, 608) is to store calibration data based on outputs of the photo sensor (214), and store a real time clock value and a current temperature value with the calibration data.

10. The color camera system (400) of claim 9, wherein the processor (104, 204, 608) is to adjust control of the liquid crystal tunable polarization filter (114, 300, 406) based on the stored calibration data.

11. The color camera system (400) of claim 1, wherein the camera system (400) comprises a photometric stereo camera system, wherein the illumination source (116, 404, 604) illuminates the object (118) at a grazing angle from multiple positions around the object (118), and wherein each of the captured images is at least 50 Megapixels.

12. A method (500) comprising:
Illuminating (502) an object (118) to be imaged with polarized light;
Receiving (504), with a liquid crystal tunable polarization filter (114, 300, 406), light reflected from the illuminated object (118);
Causing (506), with a processor (104, 204, 608), the liquid crystal tunable polarization filter (114, 300, 406) to provide a plurality of different linear polarization viewing states to a red, green, blue (RGB) colour imaging device based on the received light,
**characterised in that**
for each of the linear polarization viewing states, capturing (508) an image of the object (118) with the imaging device and separately processing red, green, blue (RGB) color state polarization information from the images using RGB color-distinct polarization filter parameters.

13. The method of claim 12, and further comprising:
adjusting, with the processor (104, 204, 608), an amplitude of a control signal provided to the liquid crystal tunable polarization filter (114, 300, 406) to provide the plurality of different linear polarization viewing states.

## Patentansprüche

1. Farbkamerasystem (400), das umfasst:
eine Kameravorrichtung (402), um Bilder eines Objekts (118) zu erfassen;
eine polarisierte Beleuchtungsquelle (116, 404, 604), um das Objekt (118) während der Erfassung der Bilder zu beleuchten; und
einen abstimmbaren Flüssigkristall-Polarisationsfilter (114, 300, 406), der zwischen der Kameravorrichtung (402) und dem Objekt (118) positioniert ist, wobei der abstimmbare Flüssigkristall-Polarisationsfilter (114, 300, 406) dazu dient, der Kameravorrichtung (402) auswählbare lineare Polarisationsbetrachtungszustände zum Erfassen der Bilder des Objekts (118) bereitzustellen,
**dadurch gekennzeichnet, dass**:
die Kameravorrichtung eine Rot-, Grün-, Blau-Farbkameravorrichtung (RGB-Farbkameravorrichtung) ist, und der abstimmbare Flüssigkristall-Polarisationsfilter eine Fähigkeit bereitstellt, jedes RGB-Pixel unter Verwendung von nach RGB-farbspezifischen Polarisationsfilterparametern eindeutig zu verarbeiten.

2. Farbkamerasystem (400) nach Anspruch 1, wobei der abstimmbare Flüssigkristall-Polarisationsfilter (114, 300, 406) ein elektrisch steuerbares Flüssigkristall-Lichtphasenverzögerungselement einschließt.

3. Farbkamerasystem (400) nach Anspruch 2, wobei der abstimmbare Flüssigkristall-Polarisationsfilter (114, 300, 406) ferner ein Viertelwellen-Verzögerungselement, das über dem Flüssigkristall-Lichtphasenverzögerungselement positioniert ist, und ein lineares Polarisatorelement, das über dem Viertelwellen-Verzögerungselement positioniert ist, einschließt, wobei das lineare Polarisatorelement näher an der Kameravorrichtung (402) positioniert ist als das Flüssigkristall-Lichtphasenverzögerungselement.

4. Farbkamerasystem (400) nach Anspruch 1, und das ferner einen Prozessor (104, 204, 608) und eine Treiberschaltung umfasst, wobei der Prozessor (104, 204, 608) dazu dient, die Treiberschaltung zu steuern, um dem abstimmbaren Flüssigkristall-Polarisationsfilter (114, 300, 406) ein Steuersignal bereitzustellen, um die linearen Polarisationsbetrachtungszustände auszuwählen.

5. Farbkamerasystem (400) nach Anspruch 4, wobei das Steuersignal ein oszillierendes Spannungssignal mit einstellbarer Amplitude ist, und wobei verschiedene der linearen Polarisationsbetrachtungszustände durch Variieren einer Amplitude des Steuersignals ausgewählt werden.

6. Farbkamerasystem (400) nach Anspruch 1, und das ferner eine Kompensationsschaltung (112, 200) umfasst, um eine Selbstkalibrierungsfunktion durchzuführen, um den abstimmbaren Flüssigkristall-Polarisationsfilter (114, 300, 406) für jeden von drei RGB-Pixelfarbkanälen von der Kameravorrichtung (402) zu kompensieren.

7. Farbkamerasystem (400) nach Anspruch 6, wobei die Kompensationsschaltung (112, 200) rote, grüne und blaue Leuchtdioden (LEDs) (216) mit linearer Polarisation, um rotes, grünes und blaues Licht in einer beliebigen Reihenfolge über den abstimmbaren Flüssigkristall-Polarisationsfilter (114, 300, 406) nacheinander zu projizieren, und einen Fotosensor (214) umfasst, um das Licht zu erfassen, das über den abstimmbaren Flüssigkristall-Polarisationsfilter (114, 300, 406) projiziert wurde.

8. Farbkamerasystem (400) nach Anspruch 7, und das ferner einen Prozessor (104, 204, 608) und eine Treiberschaltung umfasst, wobei der Prozessor (104, 204, 608) dazu dient, die Treiberschaltung zu steuern, um dem abstimmbaren Flüssigkristall-Polarisationsfilter (114, 300, 406) variierende Steuersignale bereitzustellen, während das rote, grüne und blaue Licht über den abstimmbaren Flüssigkristall-Polarisationsfilter (114, 300, 406) nacheinander projiziert wird.

9. Farbkamerasystem (400) nach Anspruch 8, wobei der Prozessor (104, 204, 608) dazu dient, Kalibrierungsdaten basierend auf Ausgaben des Fotosensors (214) zu speichern und einen Echtzeituhrwert und einen aktuellen Temperaturwert mit den Kalibrierungsdaten zu speichern.

10. Farbkamerasystem (400) nach Anspruch 9, wobei der Prozessor (104, 204,608) dazu dient, eine Steuerung des abstimmbaren Flüssigkristall-Polarisationsfilters (114, 300, 406) auf der Basis der gespeicherten Kalibrierungsdaten einzustellen.

11. Farbkamerasystem (400) nach Anspruch 1, wobei das Kamerasystem (400) ein photometrisches Stereokamerasystem umfasst, wobei die Beleuchtungsquelle (116, 404, 604) das Objekt (118) in einem streifenden Winkel aus mehreren Positionen um das Objekt (118) herum beleuchtet, und wobei jedes der erfassten Bilder mindestens 50 Megapixel aufweist.

12. Verfahren (500), das umfasst:
Beleuchten (502) eines abzubildenden Objekts (118) mit polarisiertem Licht;
Empfangen (504), mit einem abstimmbaren Flüssigkristall-Polarisationsfilter (114, 300, 406), von Licht, das von dem beleuchteten Objekt (118) reflektiert wird;
Veranlassen (506), mit einem Prozessor (104, 204, 608), dass der abstimmbare Flüssigkristall-Polarisationsfilter (114, 300, 406) einer Rot-, Grün-, Blau-Farbbildgebungsvorrichtung (RGB-Farbbildgebungsvorrichtung) auf der Basis des empfangenen Lichts eine Vielzahl von verschiedenen linearen Polarisationsbetrachtungszuständen bereitstellt,
**gekennzeichnet durch**
für jeden der linearen Polarisationsbetrachtungszustände, Erfassen (508) eines Bildes des Objekts (118) mit der Bildgebungsvorrichtung und getrenntes Verarbeiten von Rot-, Grün-, Blau-Farbzustandpolarisationsinformationen (RGB-Farbzustandpolarisationsinformationen) aus den Bildern unter Verwendung von RGB-farbspezifischen Polarisationsfilterparametern.

13. Verfahren nach Anspruch 12, und das ferner umfasst:
Einstellen, mit dem Prozessor (104, 204, 608), einer Amplitude eines Steuersignals, das dem abstimmbaren Flüssigkristall-Polarisationsfilter (114, 300, 406) bereitgestellt wird, um die Vielzahl von verschiedenen linearen Polarisationsbetrachtungszuständen bereitzustellen.

## Revendications

1. Système de caméra couleur (400) comprenant :
un dispositif de caméra (402) pour capturer des images d'un objet (118) ;
une source d'éclairage polarisée (116, 404, 604) pour éclairer l'objet (118) lors de la capture des images ; et
un filtre de polarisation accordable à cristaux liquides (114, 300, 406) positionné entre le dispositif de caméra (402) et l'objet (118), dans lequel le filtre de polarisation accordable à cristaux liquides (114, 300, 406) est destiné à fournir au dispositif de caméra (402) des états de visualisation à polarisation linéaire sélectionnables pour capturer les images de l'objet (118),
**caractérisé en ce que** :
le dispositif de caméra est un dispositif de caméra couleur rouge, vert, bleu (RVB) et le filtre de polarisation accordable à cristaux liquides permet à chaque pixel RVB d'être traité de manière unique en utilisant des paramètres de filtre de polarisation distincts pour les couleurs RVB.

2. Système de caméra couleur (400) selon la revendication 1, dans lequel le filtre de polarisation accordable à cristaux liquides (114, 300, 406) comporte un élément retardateur de phase de lumière à cristaux liquides commandable électriquement.

3. Système de caméra couleur (400) selon la revendication 2, dans lequel le filtre de polarisation accordable à cristaux liquides (114, 300, 406) comporte en outre un élément retardateur quart d'onde positionné sur l'élément retardateur de phase de lumière à cristaux liquides, et un élément polariseur linéaire positionné sur l'élément retardateur quart d'onde, dans lequel l'élément polariseur linéaire est positionné plus près du dispositif de caméra (402) que l'élément retardateur de phase de lumière à cristaux liquides.

4. Système de caméra couleur (400) selon la revendication 1, et comprenant en outre un processeur (104, 204, 608) et un circuit d'attaque, dans lequel le processeur (104, 204, 608) est destiné à commander le circuit d'attaque pour fournir un signal de commande au filtre de polarisation accordable à cristaux liquides (114, 300, 406) pour sélectionner les états de visualisation à polarisation linéaire.

5. Système de caméra couleur (400) selon la revendication 4, dans lequel le signal de commande est un signal de tension oscillant à amplitude réglable, et dans lequel différents états parmi les états de visualisation à polarisation linéaire sont sélectionnés en faisant varier une amplitude du signal de commande.

6. Système de caméra couleur (400) selon la revendication 1, et comprenant en outre un circuit de compensation (112, 200) pour effectuer une fonction d'auto-étalonnage afin de compenser le filtre de polarisation accordable à cristaux liquides (114, 300, 406) pour chacun des trois canaux de couleur de pixel RVB provenant du dispositif de caméra (402).

7. Système de caméra couleur (400) selon la revendication 6, dans lequel le circuit de compensation (112, 200) comprend des diodes électroluminescentes (LED) (216) rouges, vertes et bleues à polarisation linéaire pour projeter successivement de la lumière rouge, verte et bleue à travers le filtre de polarisation accordable à cristaux liquides (114, 300, 406) dans un ordre donné quelconque, et un photocapteur (214) pour détecter la lumière qui a été projetée à travers le filtre de polarisation accordable à cristaux liquides (114, 300, 406).

8. Le système de caméra couleur (400) selon la revendication 7, et comprenant en outre un processeur (104, 204, 608) et un circuit d'attaque, dans lequel le processeur (104, 204, 608) est destiné à commander le circuit d'attaque pour fournir des signaux de commande variables au filtre de polarisation accordable à cristaux liquides (114, 300, 406) pendant que la lumière rouge, verte et bleue est projetée successivement à travers le filtre de polarisation accordable à cristaux liquides (114, 300, 406).

9. Système de caméra couleur (400) selon la revendication 8, dans lequel le processeur (104, 204, 608) est destiné à stocker des données d'étalonnage sur la base des sorties du photocapteur (214), et à stocker une valeur d'horloge temps réel et une valeur de température actuelle avec les données d'étalonnage.

10. Système de caméra couleur (400) selon la revendication 9, dans lequel le processeur (104, 204, 608) est destiné à ajuster la commande du filtre de polarisation accordable à cristaux liquides (114, 300, 406) sur la base des données d'étalonnage stockées.

11. Système de caméra couleur (400) selon la revendication 1, dans lequel le système de caméra (400) comprend un système de caméra stéréo photométrique, dans lequel la source d'éclairage (116, 404, 604) éclaire l'objet (118) à un angle rasant à partir de multiples positions autour de l'objet (118), et dans lequel chacune des images capturées est d'au moins 50 mégapixels.

12. Procédé (500) comprenant :
L'éclairage (502) d'un objet (118) à imager avec de la lumière polarisée ;
La réception (504), avec un filtre de polarisation accordable à cristaux liquides (114, 300, 406), de la lumière réfléchie par l'objet éclairé (118) ;
Le fait d'amener (506), au moyen d'un processeur (104, 204, 608), le filtre de polarisation accordable à cristaux liquides (114, 300, 406) à fournir une pluralité d'états de visualisation de polarisation linéaire différents à un dispositif d'imagerie couleur rouge, vert, bleu (RVB) sur la base de la lumière reçue,
**caractérisé en ce que**
pour chacun des états d'observation de polarisation linéaire, la capture (508) d'une image de l'objet (118) avec le dispositif d'imagerie et traiter séparément les informations de polarisation d'état de couleur rouge, vert, bleu (RVB) à partir des images à l'aide des paramètres de filtre de polarisation distincts pour les couleurs RVB.

13. Procédé selon la revendication 12, et comprenant en outre :
l'ajustement, avec le processeur (104, 204, 608), d'une amplitude d'un signal de commande fourni au filtre de polarisation accordable à cristaux liquides (114, 300, 406) pour fournir la pluralité de différents états de visualisation à polarisation linéaire.
